# FASCICULE DE BREVET EUROPEEN

(11) **EP 0 640 845 B1**
(45) Date de publication et mention de la délivrance du brevet: **20.12.2000**
(21) Numéro de dépôt: 94401851.4
(22) Date de dépôt: 12.08.1994
(51) Int. Cl.: G01S 15/88, G01S 15/10

(54) **Procédé de détermination à distance de la vitesse tridimensionnelle d'un fluide tel que l'air ou l'eau**
Verfahren zur Fernbestimmung der dreidimensionalen Geschwindigkeit einer Flüssigkeit wie Luft oder Wasser
Method for remote determination of the three-dimensional speed of a fluid like air or water

(30) Priorité: 30.08.1993 FR 9310348
(43) Date de publication de la demande: 01.03.1995
(73) Titulaire: REMTECH, F-78140 Velizy (FR)
(72) Inventeur: Fage, Jean-Michel, F-75004 Paris (FR); Donzier, Alain, F-75015 Paris (FR); Tasso, Rémy, F-78117 Chateaufort (FR)
(74) Mandataire: Martinet & Lapoux

(56) Documents cités:
- EP-A- 0 011 912
- EP-A- 0 166 066
- EP-A- 0 380 441
- DE-A- 3 806 847
- US-A- 3 893 060
- US-A- 4 143 547
- US-A- 4 558 594
- US-A- 4 870 628

## Description

L'invention concerne un procédé de détermination à distance de la vitesse tridimensionnelle d'un fluide tel que l'air ou l'eau, au moyen d'un réseau de transducteurs acoustiques utilisés comme émetteurs et comme récepteurs.

Il est déjà connu d'utiliser un réseau plan de transducteurs acoustiques agencés en rangées et en colonnes et orientés dans une même direction perpendiculaire au plan du réseau, pour émettre des signaux acoustiques dans des directions différentes et recevoir les signaux rétro-diffusés par le fluide. Le principe de commande et de fonctionnement d'un réseau de ce type est déjà décrit notamment par le Brevet US-3 448 450 dans le cas d'un radar, par le Brevet Français 2 499 252 dans le cas d'un sonar, et par le Brevet US 4 558 594 dans le cas d'un sodar ou "radar" acoustique pour la détermination de la vitesse du vent dans l'atmosphère.

Dans les dispositifs de ce type, il est classique d'émettre des signaux de fréquence constante connue dans une direction déterminée, puis de capter les signaux rétrodiffusés dans cette direction, de déterminer leur fréquence et de déduire la vitesse du fluide dans la direction précitée à partir de l'écart entre la fréquence des signaux émis et celle des signaux captés (effet Doppler). On peut ainsi, en émettant et en captant des signaux acoustiques successivement dans trois directions différentes, déterminer des vitesses tridimensionnelles du vent dans l'atmosphère ou de l'eau dans un courant marin par exemple.

L'invention a notamment pour but d'augmenter largement les performances des sodars ou sonars du type à réseau de transducteurs acoustiques, grâce à un procédé permettant d'améliorer la précision des mesures, d'augmenter la portée maximale des sodars ou sonars, et simultanément de réduire les durées totales d'acquisition de signaux.

Elle propose à cet effet un procédé de détermination à distance de la vitesse tridimensionnelle d'un fluide tel que l'air ou l'eau, consistant à émettre des signaux acoustiques de fréquence déterminée dans au moins trois directions différentes au moyen d'un réseau de transducteurs, à capter au moyen des mêmes transducteurs les signaux acoustiques rétrodiffusés par le fluide, et à déterminer les vitesses du fluide dans les directions précitées à partir des décalages de fréquence entre les signaux émis et les signaux captés, caractérisé en ce qu'il consiste à émettre un train de signaux ayant des durées déterminées et des fréquences différentes déterminées dans l'une des directions précitées, puis dans une autre de ces directions et ainsi de suite jusqu'à ce que ce train de signaux ait été émis successivement dans chacune des directions précitées, puis à capter simultanément tous les signaux rétrodiffusés, à traiter simultanément les signaux captés pour obtenir pour chaque direction précitée des spectres de fréquence se succédant dans le temps, et à en déduire des vitesses de fluide à des distances différentes dans chaque direction précitée.

La durée totale de réception des signaux rétrodiffusés, pour une portée déterminée, est ainsi réduite d'un facteur égal au nombre de directions d'émission par rapport au cas où l'on émet et on reçoit les signaux d'abord dans une direction, puis dans une autre direction et ainsi de suite. Cet avantage devient particulièrement important dès que l'on émet dans plus de trois directions, et par exemple dans cinq directions.

De plus, l'utilisation de plusieurs fréquences d'émission permet d'obtenir une précision de mesure donnée avec un rapport signal sur bruit plus faible, par exemple de 15 à 20 dB lorsqu'on utilise cinq fréquences d'émission, ce qui a également pour conséquence une augmentation de la portée maximale de détection.

En outre, l'émission des signaux d'abord dans une direction, puis dans une autre etc, permet d'émettre à pleine puissance dans chaque direction.

Dans un premier mode de réalisation de l'invention, le traitement précité des signaux captés consiste essentiellement à les amplifier, à les numériser, à les combiner entre eux pour obtenir des signaux par direction d'émission, et à appliquer à ces derniers des transformées de Fourier rapides.

Un tel traitement est essentiellement numérique et est réalisable à vitesse très élevée sur des systèmes classiques de traitement de l'information.

Dans un autre mode de réalisation de l'invention, le traitement précité des signaux consiste essentiellement à les amplifier, à les numériser, à leur appliquer des transformées de Fourier rapides et à les combiner entre eux pour obtenir des signaux correspondant aux directions d'émission.

Dans encore un autre mode de réalisation de l'invention, ce traitement consiste essentiellement à les amplifier, à les combiner entre eux pour obtenir des signaux analogiques correspondant aux directions d'émission, puis à numériser les signaux ainsi obtenus et à leur appliquer des transformées de Fourier rapides.

Le procédé selon l'invention consiste également à vérifier la compatibilité des vitesses obtenues aux différentes fréquences d'émission et dans des directions symétriques d'émission pour éliminer des résultats erronés ou aberrants, ce qui contribue à l'obtention d'une précision donnée avec un rapport signal sur bruit plus faible.

Pour que le procédé soit applicable aux mesures effectuées à des distances faibles, l'invention prévoit également de permuter l'ordre d'émission des signaux de fréquences différentes, et l'ordre des directions d'émission.

Dans un mode de réalisation particulier, l'invention prévoit d'émettre des trains de signaux à cinq fréquences différentes successivement dans cinq directions différentes.

La redondance d'informations résultant de l'émission de cinq fréquences dans cinq directions contribue à l'amélioration de la précision des mesures et à l'augmentation de la portée maximale de la détection. Par ailleurs, le mode de commande d'un réseau plan de transducteurs acoustiques reste simple quand on émet dans cinq directions différentes comprenant la perpendiculaire au plan du réseau et quatre autres directions deux à deux symétriques par rapport à cette perpendiculaire.

L'invention est applicable aussi bien à la détection de la vitesse du vent dans l'atmosphère (système sodar) qu'à la détection de la vitesse des courants marins à différentes profondeurs (système sonar).

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 représente schématiquement un réseau plan de transducteurs acoustiques pour la mise en oeuvre du procédé selon l'invention;
la figure 2 est un graphe illustrant schématiquement l'émission et la réception de signaux acoustiques dans le cadre du procédé selon l'invention;
la figure 3 représente schématiquement une chaîne de traitement des signaux rétrodiffusés captés par les transducteurs acoustiques.

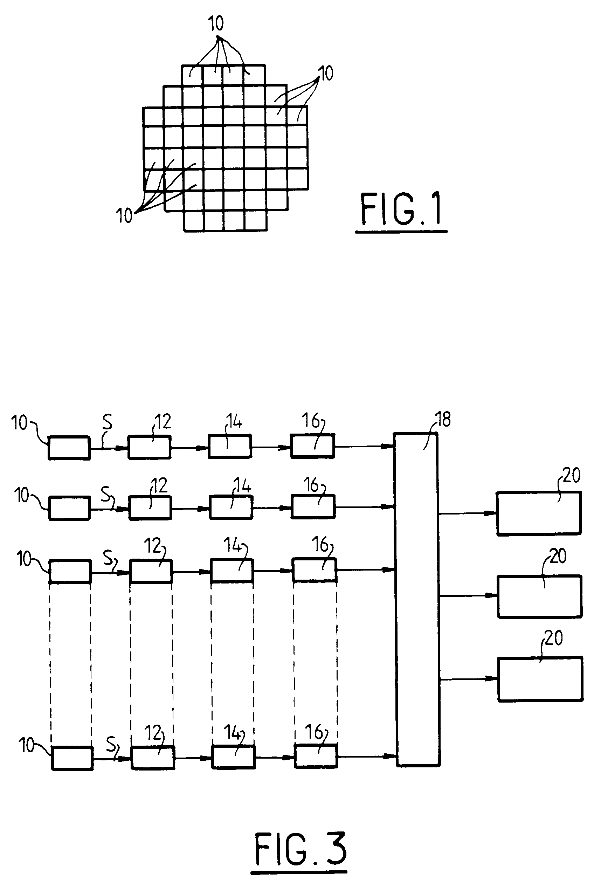

On a représenté schématiquement en figure 1, à titre d'exemple, un réseau plan de transducteurs acoustiques 10, qui sont agencés en rangées et en colonnes et qui sont tous orientés dans une même direction perpendiculaire au plan du dessin.

Ces réseaux de transducteurs sont maintenant bien connus dans la technique, ainsi que leur principe de commande et de fonctionnement.

De façon résumée, pour émettre successivement dans des directions différentes, on alimente des lignes de transducteurs 10 par des signaux de fréquence déterminée qui sont déphasés par exemple de 90° d'une ligne de transducteurs à l'autre, ce qui détermine une première direction d'émission, puis on alimente ces mêmes lignes de transducteurs 10 avec des signaux de même fréquence, mais déphasés de 90° en sens inverse d'une ligne à l'autre, ce qui se traduit par l'émission dans une direction symétrique de la première par rapport à la perpendiculaire au plan du dessin, puis on alimente des colonnes de transducteurs 10 par des signaux de même fréquence mais déphasés de 90° d'une colonne à la suivante et ainsi de suite, et pour finir on alimente tous les transducteurs 10 par des signaux de même fréquence en phase pour obtenir une émission dans une direction perpendiculaire au plan du dessin.

On peut ainsi émettre dans cinq directions différentes, l'une de ces directions étant perpendiculaire au plan du dessin, les autres directions étant symétriques deux à deux par rapport à la première direction et contenues dans des plans perpendiculaires qui se coupent sur la première direction.

Cette technique est bien connue de l'homme du métier et décrite dans les documents antérieurs cités plus haut.

De façon similaire, les signaux rétrodiffusés qui sont captés par les transducteurs 10 sont traités comme les signaux d'émission, mais à l'inverse: les signaux de sortie des transducteurs 10 sont combinés entre eux après avoir été déphasés de 90° les uns par rapport aux autres d'une ligne à la suivante ou d'une colonne à la suivante, leur combinaison ou sommation permettant d'obtenir simultanément autant de signaux de réception que de directions d'émission.

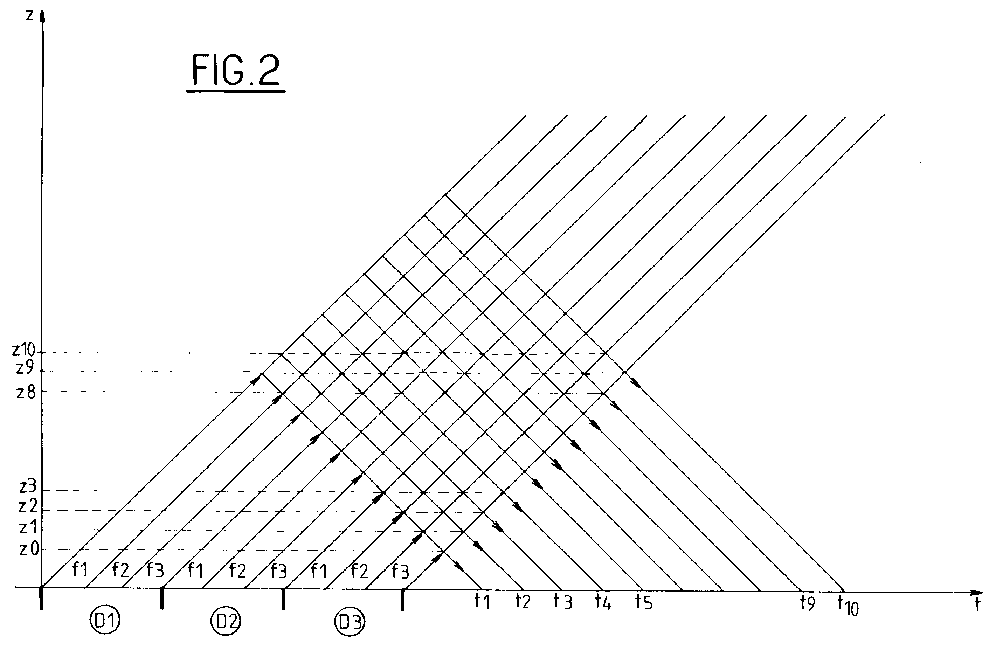

Pour mieux faire comprendre les caractéristiques essentielles de l'invention, on se réfèrera maintenant à la figure 2, qui est un graphe représentant schématiquement l'émission de signaux acoustiques de fréquences différentes dans des directions différentes et la réception des signaux rétrodiffusés, par exemple par l'atmosphère, le temps t étant porté en abscisse et l'altitude z en ordonnée. Le graphe de la figure 3 correspond au cas simplifié où l'on émet des signaux de trois fréquences différentes f1, f2, f3 successivement dans trois directions différentes D1, D2, D3.

Le procédé selon l'invention consiste à émettre, dans la direction D1, d'abord un signal de fréquence f1 pendant une durée déterminée, puis un signal de fréquence f2 pendant la même durée et ensuite un signal de fréquence f3 pendant la même durée, à émettre ensuite dans la direction D2 le signal de fréquence f1 pendant la durée précitée, puis le signal f2 pendant la même durée et ensuite le signal de fréquence f3 pendant la même durée et enfin à émettre dans la direction D3 le signal de fréquence f1 pendant la durée précitée, puis le signal de fréquence f2 pendant la même durée et ensuite le signal de fréquence f3 pendant la même durée. Les durées de ces signaux ne sont pas nécessairement égales et peuvent être quelconques.

Ces signaux se déplacent dans l'atmosphère à une vitesse de l'ordre de 300 m par seconde et sont partiellement rétrodiffusés par l'atmosphère. Les signaux rétrodiffusés sont captés par les transducteurs 10, la réception de ces signaux ayant lieu après les émissions de signaux à toutes les fréquences dans toutes les directions déterminées, et commençant un certain laps de temps après la fin des émissions, ce laps de temps relativement faible correspondant à des commutations de circuits et déterminant une altitude minimale z0 de mesure. Si l'on désigne par t1 le début de la réception, on voit que l'on reçoit dans l'intervalle t1-t2 les signaux qui ont été émis à la fréquence f3 dans la direction D3 et qui ont été rétrodiffusés par la tranche d'altitude z0-z2, les signaux qui ont été émis à la fréquence f2 dans la direction D3 et qui ont été rétrodiffusés par la tranche d'altitude z1-z3, les signaux qui ont été émis à la fréquence f1 dans la direction D3 et qui ont été rétrodiffusés par la tranche d'altitude z2-z4, et ainsi de suite, et finalement des signaux qui ont été émis à la fréquence f1 dans la direction D1 et qui ont été rétrodiffusés par la tranche d'altitude z8-z10.

On constate également que pour la tranche d'altitude z0-z2, on reçoit pendant l'intervalle de temps t1-t2 uniquement le signal qui a été émis à la fréquence f3 dans la direction D3 et qui a été rétrodiffusé par la tranche d'altitude z0-z2, et qu'on ne reçoit pour cette tranche ni les signaux émis aux fréquences f1 et f2 dans la direction D3, ni les signaux émis dans les directions D1 et D2.

Pour la tranche d'altitude z1-z3 centrée en z2, on reçoit pendant l'intervalle de temps t1-t2 le signal émis à la fréquence f2 dans la direction D3, et pendant l'intervalle de temps t2-t3 le signal émis à la fréquence f3 dans la direction D3.

Pour la tranche d'altitude z8-z10 centrée en z9, on peut capter pendant l'intervalle de temps t1-t10 tous les signaux de fréquence f1, f2 et f3 émis dans les directions D1, D2 et D3 et qui ont été rétrodiffusés, par cette tranche. On dispose ainsi, à partir de cette tranche d'altitude et pour chaque tranche d'altitude supérieure, de trois fréquences différentes émises dans trois directions différentes, et donc de neuf informations sur la vitesse du vent à une altitude donnée.

Dans le cas où l'on émet des trains de signaux de cinq fréquences différentes dans cinq directions différentes, c'est à partir de la tranche d'altitude z24-z26 centrée en z25 (non représentée) que l'on peut recueillir 25 informations sur la vitesse du vent à une altitude donnée.

L'invention prévoit également de permuter, à intervalles réguliers ou non, l'ordre d'émission des fréquences et l'ordre des directions d'émission. On peut ainsi obtenir davantage d'informations aux altitudes faibles et par exemple disposer de signaux rétrodiffusés provenant des signaux émis aux fréquences f1, f2 et f3 dans les directions D1, D2 et D3 pour des altitudes qui sont inférieures à la tranche z8-z10 dans le cas représenté en figure 2.

Pour éviter une éventuelle ambiguïté due par exemple à un décalage de fréquence par effet Doppler qui serait du même ordre de grandeur que l'écart entre deux fréquences d'émission, on peut déterminer l'ordre de grandeur du décalage de fréquence par effet Doppler en émettant par intermittence, avant ou après une série de mesures, des signaux ayant une fréquence unique dans chacune des directions prédéterminées de mesure. Le résultat que l'on obtient ainsi permet de fixer l'ordre de grandeur de l'effet Doppler dû à la vitesse du vent, ce qui permet d'apprécier les risques d'ambiguïté et de prendre les mesures nécessaires. On peut également émettre dans ce but des signaux dont les fréquences sont différentes et séparées par des écarts relativement grands, supérieurs au décalage Doppler.

On fera maintenant référence à la figure 3 pour décrire un mode de traitement des signaux de sortie des transducteurs 10, représentant les signaux acoustiques rétrodiffusés par l'atmosphère à des altitudes différentes et dans des directions différentes.

Dans le réseau de transducteurs 10 de la figure 1, qui comprend 52 transducteurs, ces derniers sont groupés en 16 sous-ensembles, de façon connue, pour faciliter le pilotage du réseau de transducteurs. Ce sont ces sous-ensembles de transducteurs 10 qui captent les signaux rétrodiffusés par l'atmosphère et qui produisent les signaux de sortie qui sont appliqués à la chaîne de traitement de la figure 2.

Cette chaîne de traitement comprend 16 voies en parallèle, dont chacune reçoit le signal de sortie S d'un sous-ensemble de transducteurs 10, ce signal étant d'abord transmis à un amplificateur 12 dont la sortie est reliée à des moyens 14 de conversion analogique-numérique, tels par exemple que des moyens d'échantillonnage.

On traite ensuite les signaux numériques en 16 par des transformées de Fourier rapides pour avoir accès aux fréquences de ces signaux.

Les résultats de ces transformations sont ensuite traités en 18 par un logiciel de combinaison de signaux, qui, comme indiqué plus haut, combine ces signaux par déphasage et sommation d'une façon similaire à ce qui a été fait pour l'émission de signaux de fréquences différentes dans des directions différentes, afin d'obtenir en sortie des spectres de fréquence 20 correspondant chacun à une direction d'émission.

En variante, les signaux amplifiés en 12 peuvent être combinés entre eux pour fournir des signaux correspondant aux différentes directions d'émission, avant ou après leur numérisation en 14 et avant qu'on les traite par des transformées de Fourier rapides.

Dans le cas où l'on émet trois fréquences différentes successivement dans chaque direction d'émission, chaque spectre de fréquence 20 comprend trois fréquences correspondant chacune à une tranche d'altitude différente.

Les signaux de fréquences qui sont ainsi successivement obtenus dans le temps sont ensuite rassemblés par tranche d'altitude et par direction d'émission. Par comparaison de ces fréquences aux fréquences d'émission, on obtient des décalages de fréquence qui sont dûs aux effets Doppler de la vitesse de l'air dans des directions données et pour des tranches d'altitude déterminées.

On obtient donc ainsi finalement les composantes tridimensionnelles de la vitesse de l'air à des tranches d'altitude différentes.

Dans tous les cas, on vérifie à la fin du traitement si les vitesses obtenues aux différentes fréquences sont compatibles entre elles. Cette comparaison porte sur les vitesses obtenues aux différentes fréquences d'émission pour une même direction d'émission, et également sur les composantes horizontales des vitesses obtenues pour des directions d'émission symétriques par rapport à la verticale.

Pour fixer les idées, on va indiquer ci-dessous, à titre d'exemple, les caractéristiques essentielles de trois dispositifs dans lesquels le procédé selon l'invention est mis en oeuvre :
- le premier dispositif est un sodar de mesure de la vitesse de l'atmosphère entre une altitude minimum de l'ordre de 20 m et une altitude maximum comprise entre 1 et 2 km environ. On émet avec ce dispositif cinq signaux de fréquences différentes successivement dans cinq directions différentes, la durée d'émission de chaque signal est de l'ordre de 200 ms, la puissance acoustique d'émission est typiquement comprise entre 2 et 80 W, et les fréquences d'émission sont centrées sur 2100 Hz et diffèrent les unes des autres de 75 Hz. La durée totale d'émission dans les cinq directions différentes est donc de l'ordre de 5 secondes, la durée de réception étant de l'ordre de 10 secondes. La durée de traitement des signaux de sortie des transducteurs est de l'ordre d'une dizaine de secondes et varie avec la portée du dispositif. En pratique, les cycles émission-réception sont répétés sur quelques minutes, pour fournir des valeurs moyennes des mesures.
- le deuxième dispositif est également un sodar pour la mesure de la vitesse de l'air entre une altitude minimum de 60 m environ et une altitude maximum comprise entre 3 et 5 km environ. Ce dispositif émet cinq signaux de fréquences différentes successivement dans cinq directions différentes, la durée d'émission de chaque signal étant d'environ 600 ms, sa puissance d'environ 200-300 W, les fréquences des signaux d'émission étant centrées sur 700 Hz et séparées les unes des autres de 25 Hz environ. La durée totale d'émission dans les cinq directions différentes est donc de l'ordre de 15 secondes, la durée de réception étant de l'ordre de 30 secondes.
- le troisième dispositif est un sonar pour la mesure de la vitesse de l'eau à des profondeurs comprises entre 20 m environ et 1 à 2 km environ. Ce dispositif émet cinq signaux de fréquences différentes successivement dans cinq directions différentes, la durée d'émission de chaque signal étant de 40 ms environ, sa puissance de quelques W à plusieurs centaines de W, les fréquences d'émission étant centrées sur 40 kHz en étant séparées les unes des autres de 500 Hz environ.

## Revendications

1. Procédé de détermination à distance de la vitesse tridimensionnelle d'un fluide tel que l'air ou l'eau, consistant à émettre des signaux acoustiques de fréquence déterminée dans au moins trois directions différentes au moyen d'un réseau de transducteurs (10), à capter au moyen des mêmes transducteurs les signaux acoustiques rétrodiffusés par le fluide, et à déterminer les vitesses du fluide dans les directions précitées à partir des décalages de fréquence entre les signaux émis et les signaux captés, caractérisé en ce qu'il consiste à émettre un train de signaux ayant des durées déterminées et des fréquences différentes déterminées dans une direction D1 précitée puis dans une autre D2 de ces directions et ainsi de suite jusqu'à ce que ce train de signaux ait été émis successivement dans chacune des directions précitées, puis à capter tous les signaux rétrodiffusés, à traiter simultanément les signaux captés pour obtenir pour chaque direction précitée des spectres de fréquence (20) se succédant dans le temps, et à en déduire des vitesses de fluide à des distances différentes dans chaque direction précitée.

2. Procédé selon la revendication 1,
caractérisé en ce que le traitement des signaux captés consiste essentiellement à les amplifier, à les numériser, à les combiner entre eux pour obtenir des signaux correspondant aux directions d'émission, et à leur appliquer des transformées de Fourier rapides.

3. Procédé selon la revendication 1,
caractérisé en ce que le traitement des signaux captés consiste essentiellement à les amplifier, à les numériser, à leur appliquer des transformées de Fourier rapides et à les combiner entre eux pour obtenir des signaux correspondant aux directions d'émission.

4. Procédé selon la revendication 1,
caractérisé en ce que le traitement des signaux captés consiste essentiellement à les amplifier, à les combiner entre eux pour obtenir des signaux analogiques correspondant aux directions d'émission, puis à numériser les signaux ainsi obtenus et à leur appliquer des transformées de Fourier rapides.

5. Procédé selon l'une des revendications 1 à 4, caractérisé en ce qu'il consiste, pour des mesures de vitesses à des distances faibles, à permuter l'ordre d'émission des signaux de fréquences différentes et l'ordre des directions d'émission.

6. Procédé selon l'une des revendications
précédentes, caractérisé en ce qu'il consiste à vérifier la compatibilité des vitesses obtenues aux différentes fréquences d'émission pour une direction d'émission, et pour des directions d'émission symétriques par rapport à la verticale.

7. Procédé selon l'une des revendications
précédentes, caractérisé en ce que le nombre de fréquences différentes émises est au moins égal à 3.

8. Procédé selon l'une des revendications
précédentes, caractérisé en ce qu'il consiste à émettre successivement dans cinq directions différentes des trains de signaux à cinq fréquences différentes.

9. Procédé selon l'une des revendications
précédentes, caractérisé en ce qu'il consiste à émettre par intermitence des signaux de fréquence unique pour déterminer l'ordre de grandeur du décalage de fréquence entre les signaux émis et les signaux captés, ou des singaux de fréqences différentes séparées par des écarts relativement importants, supérieurs aux décalages de fréquence à mesurer.

10. Procédé selon l'une des revendications
précédentes, caractérisé en ce que le fluide étant de l'air atmosphérique, les signaux émis ont des durées de l'ordre de 200 ms et des fréquences d'émission séparées d'environ 75 Hz, la gamme des fréquences d'émission étant centrée sur une valeur de 2,1 kHz environ.

11. Procédé selon l'une des revendications 1 à 9, caractérisé en ce que le fluide étant de l'air atmosphérique, les signaux émis ont des durées de l'ordre de 600 ms et des fréquences séparées de 25 Hz environ, la gamme de fréquences d'émission étant centrée sur une valeur d'environ 700 Hz.

12. Procédé selon l'une des revendications 1 à 9, caractérisé en ce que le fluide étant de l'eau, les signaux émis ont des durées de l'ordre de 40 ms et des fréquences séparées de 500 Hz, la gamme de fréquences d'émission étant centrée sur une valeur de 40kHz environ.

## Claims

1. A method of remotely determining the three-dimensional velocity of a fluid such as air or water, the method consisting in emitting acoustic signals of determined frequency in at least three different directions by means of an array of transducers (10), to pick up by means the same transducers the acoustic signals backscattered by the fluid, and to determine the velocities of the fluid in said directions from the frequency shifting between the emitted signals and the picked-up signals, characterized in that the method consists in emitting a train of signals with determined durations and determined different frequencies in one above direction D1 then in another D2 of these directions, and so on until said train of signals has been emitted successively in all said directions, then in picking up all the backscattered signals, in processing simultaneously the picked-up signals to obtain frequency spectra (20) following one another in time for each of the said directions, and in deducing therefrom the velocities of the fluid at different distances in each of the said directions.

2. A method according to claim 1, characterized in that the processing of the picked-up signals consists essentially in amplifying them, in digitizing them, in combining them mutually to obtain signals corresponding to the emission directions, and in applying fast Fourier transforms thereto.

3. A method according to claim 1, characterized in that the processing of the picked-up signals consists essentially in amplifying them, in digitizing them, in applying fast Fourier transforms thereto, and in mutually combining them to obtain signals corresponding to the emission directions.

4. A method according to claim 1, characterized in that the processing of the picked-up signals consists essentially in amplifying them, in mutually combining them to obtain analog signals corresponding to the emission directions, then in digitizing the signals obtained in this way and in applying fast Fourier transforms thereto.

5. A method according to any one of claims 1 to 4, characterized in that the method consists, for measuring velocities at short distances, in permutating the emission order of the signals at different frequencies and the order of the emission directions.

6. A method according to any one of the preceding claims, characterized in that the method consists in verifying the compatibility of the velocities obtained at different emission frequencies for a given emission direction, and for emission directions that are symmetrical about the vertical.

7. A method according to any one of the preceding claims, characterized in that the number of different frequencies emitted is not less than 3.

8. A method according to any one of the preceding claims, characterized in that the method consists in emitting trains of signals at five different frequencies successively in five different directions.

9. A method according to any one of the preceding claims, characterized in that the method consists in intermittently emitting signals at a single frequency to determine the order of magnitude of the frequency offset between emitted signals and picket-up signals, or signals of differrent frequencies separated by relatively large differences, greater than the frequency offsets to be measured.

10. A method according to any one of the preceding claims, characterized in that the fluid is atmospheric air, the emitted signals have durations of the order of 200 ms and the emission frequencies are separated by about 75 Hz, the range of emission frequencies being centered on a value of about 2.1 kHz.

11. A method according to any one of claims 1 to 9, characterized in that the fluid is atmospheric air, the emitted signals have durations of the order of 600 ms and the emission frequencies are separated by about 25 Hz, the range of emission frequencies being centered on a value of about 700 Hz.

12. A method according to any one of claims 1 to 9, characterized in that the fluid is water and the emitted signals have durations of the order of 40 ms and frequencies that are separated by 500 Hz, the emission frequency range being centered on a value of about 40 kHz.

## Patentansprüche

1. Verfahren zur Fernbestimmung der dreidimensionalen Geschwindigkeit eines Fluides, wie Luft oder Wasser, das darin besteht, akustische Signale bestimmter Frequenz in wenigstens drei verschiedenen Richtungen mittels eines Meßwandlernetzes (10) auszusenden, um mittels der gleichen Meßwandler die durch das Fluid zurückgestreuten akustischen Signale aufzufangen und um die Geschwindigkeiten des Fluides in den vorgenannten Richtungen aus der Verschiebung der Frequenz zwischen ausgesendeten Signalen und eingefangenen Signalen zu bestimmen, dadurch gekennzeichnet, dass es darin besteht einen Zug von Signalen auszusenden, welche eine bestimmte Zeitdauer und in einer Richtung D1, dann in einer anderen Richtung D2 dieser Richtungen usw., bestimmte verschiedenen Frequenzen aufweisen, bis der Zug von Signalen aufeinanderfolgend in jeder der vorgenannten Richtungen ausgesendet worden ist, um dann alle zurückgestreuten Signale aufzufangen, gleichzeitig die aufgefangenen Signale zu verarbeiten, um für jede vorgenannte Richtung Frequenzspektren (20), welche zeitlich aufeinanderfolgen zu erhalten und daraus die Geschwindigkeiten des Fluides in verschiedenen Abständen in jeder vorgenannten Richtung abzuleiten.

2. Verfahren nach Anspruch 1, dadurch gekennzeichnet, dass die Verarbeitung der eingefangen Signale im Wesentlichen darin besteht, diese zu verstärken, zu digitalisieren, untereinander zu kombinieren, um Signale zu erhalten, welche den Emissionsrichtungen entsprechen und sie schnellen Fouriertransformationen zu unterziehen.

3. Verfahren nach Anspruch 1, dadurch gekennzeichnet, dass die Verarbeitung der eingefangen Signale im Wesentlichen darin besteht, diese zu verstärken, zu digitalisieren und sie einer schnellen Fouriertransformation zu unterziehen und sie miteinander zu kombinieren, um Signale zu erhalten, welche den Emissionsrichtungen entsprechen.

4. Verfahren nach Anspruch 1, dadurch gekennzeichnet, dass die Verarbeitung der eingefangen Signale im wesentlichen darin besteht, diese zu verstärken, untereinander zu kombinieren, um Analogsignale zu erhalten, welche den Emissionsrichtungen entsprechen, dann die so erhaltenen Signale zu digitalisieren und sie einer raschen Fouriertransformation zu unterziehen.

5. Verfahren nach einem der Ansprüche 1 bis 4, dadurch gekennzeichnet, dass es zur Messung von Geschwindigkeiten in geringen Abständen darin besteht, die Ordnung der Emission von Signalen verschiedener Frequenz und die Ordnung der Emissionsrichtungen zu permutieren.

6. Verfahren nach einem der vorhergehenden Ansprüche, dadurch gekennzeichnet, dass es darin besteht, die Kompatibilität von Geschwindigkeiten zu überprüfen, welche bei verschiedenen Emissionsfrequenzen für eine Emissionsrichtung erhalten wurden und für bezüglich der Vertikalen symmetrische Emissionsrichtungen.

7. Verfahren nach einem der vorhergehenden Ansprüche, dadurch gekennzeichnet, dass die Anzahl von ausgesendeten verschiedenen Frequenzen wenigstens gleich 3 ist.

8. Verfahren nach einem der vorhergehenden Ansprüche, dadurch gekennzeichnet, dass es darin besteht aufeinanderfolgend in fünf verschiedenen Richtung Signalzüge mit fünf verschiedenen Frequenzen auszusenden.

9. Verfahren nach einem der vorhergehenden Ansprüche, dadurch gekennzeichnet, dass es darin besteht, durch Unterbrechung Signale einheitlicher Frequenz auszusenden, um die Größenordnung der Frequenzverschiebung zwischen den ausgesendeten Signalen und den eingefangenen Signalen oder Signale verschiedener Frequenzen, welche durch relativ wesentliche Abstände getrennt sind, oberhalb von Verschiebungen zu messender Frequenzen zu bestimmen.

10. Verfahren nach einem der vorhergehenden Ansprüche, dadurch gekennzeichnet, dass das Fluid atmosphärische Luft ist, die ausgesendeten Signale eine Zeitdauer in der Größenordnung von 200 ms und Emissionsfrequenzen, getrennt um etwa 75 Hz aufweisen, wobei der Bereich der Emissionfrequenzen um einen Wert von etwa 2,1 kHz angeordnet ist.

11. Verfahren nach einem der Ansprüche 1 bis 9, dadurch gekennzeichnet, dass das Fluid atmosphärische Luft ist, die ausgesendeten Signale eine Zeitdauer in der Größenordnung von 600 ms und um etwa 25 Hz getrennte Frequenzen aufweist, wobei der Bereich der Emissionsfrequenzen um einen Wert von etwa 700 Hz angeordnet ist.

12. Verfahren nach einem der Ansprüche 1 bis 9, dadurch gekennzeichnet, dass das Fluid Wasser ist, die ausgesendeten Signale eine Zeitdauer in der Größenordnung von 40 ms und um 500 Hz getrennte Frequenzen aufweisen, wobei der Bereich der Emissionsfrequenzen um einen Wert von 40kHz angeordnet ist.
